# EUROPÄISCHE PATENTSCHRIFT

(11) **EP 0 361 166 B1**
(45) Veröffentlichungstag und Bekanntmachung des Hinweises auf die Patenterteilung: **16.03.1994**
(21) Anmeldenummer: 89116566.4
(22) Anmeldetag: 07.09.1989
(51) Int. Cl.: B60R 1/08

(54) **Verstellvorrichtung für zwei beidseitige Aussenspiegel eines Zugfahrzeugs eines Kraftfahrzeug-Lastzuges**
Adjusting device for the two external rearview mirrors of a tractor vehicle in a tractor-trailer combination
Dispositif de réglage des deux rétroviseurs extérieurs du véhicule tracteur d'un camion semi-remorque

(30) Priorität: 12.09.1988 DE 3830985
(43) Veröffentlichungstag der Anmeldung: 04.04.1990
(73) Patentinhaber: Jung, Manfred, A-4845 Rutzenmoos (AT)
(72) Erfinder: Jung, Manfred, A-4845 Rutzenmoos (AT)
(74) Vertreter: Flosdorff, Jürgen, Dr.

(56) Entgegenhaltungen:
- WO-A-86/05451
- FR-A- 2 178 515
- US-A- 3 469 901
- US-A- 3 749 480
- US-A- 4 609 265
- PATENT ABSTRACTS OF JAPAN, Band 9, Nr. 330 (M-442)[2053], 25.Dezember 1985

## Beschreibung

Die Erfindung betrifft eine Verstellvorrichtung gemäß dem Oberbegriff des Patentanspruchs 1. Die Erfindung ist nicht nur auf Lastzüge der darin genannten Art anwendbar, sondern ebenfalls bei Gelenk-Omnibussen verwendbar.

Wenn ein Kraftfahrzeug-Lastzug, der auch ein aus einem Zugfahrzeug und einem Auflieger bestehender Sattelschlepper sein kann, bei Vorwärtsfahrt eine Linkskurve durchfährt, gerät das Ende des Anhängers aus dem Sichtfeld des linken Außenspiegels, in dem statt dessen ein weiter vorne gelegener, linker Seitenbereich des Lastzuges erscheint. Beim Durchfahren einer Rechtskurve gerät entsprechend das Ende des Anhängers aus dem Sichtfeld des rechten Außenspiegels. Hierdurch ist insbesondere bei engen Kurvenfahrten in einer Ortschaft die Verkehrssicherheit beeinträchtigt.

Damit bei derartigen Kurvenfahrten die beiden Außenspiegel des Zugfahrzeugs stets so eingestellt sind, daß der Fahrer den Endbereich des Anhängers seines Lastzuges in einem der Außenspiegel im Auge behalten kann, ist in der GB-A-1 414 373 eine Verstellvorrichtung für die Außenspiegel vorgeschlagen worden. Diese Verstellvorrichtung ist am Lenkgestänge des Zugfahrzeugs befestigt und steuert die Außenspiegel mechanisch über ein Zug/Druck-Kabel in Abhängigkeit von dem Lenkradeinschlag.

Abgesehen davon, daß bei der bekannten Verstellvorrichtung mit der mechanischen Übertragung der Bewegung des Lenkgestänges auf die Außenspiegel keine auf Dauer zuverlässige, korrekte Spiegelverstellung gewährleistet ist, kann hierdurch die Position der Außenspiegel nur bei Vorwärtsfahrt so eingestellt werden, daß der Endbereich des Anhängers im Sichtfeld des jeweiligen Außenspiegel bleibt. Der Grund hierfür liegt darin, daß sich bei Rückwärtsfahrt eines Lastzuges der Knickwinkel zwischen dem Zugfahrzeug und dem Anhänger umkehrt, d.h. bei beispielsweise nach rechts eingeschlagenem Lenkrad beschreibt der Anhänger bei Rückwärtsfahrt eine Linkskurve die bei Vorwärtsfahrt durch eine nach links weisende Stellung des Lenkrades hervorgerufen wird. Dies bedeutet, daß bei der bekannten Verstellvorrichtung der ohnehin für die Beobachtung des Anhängers unbrauchbare, da nach außen weisende Außenspiegel noch weiter nach außen verschwenkt wird, während in dem anderen Außenspiegel ein vorderer Seitenbereich des Lastzuges erscheint. Zur Verkehrssicherheit bei Rückwärtsfahrt kann daher die bekannte Verstellvorrichtung nicht beitragen.

Es ist ferner bekannt, einen mit einem Verstellmotor versehenen Außenspiegel von der Fahrerkabine aus auf einen entsprechenden Knopfdruck hin nach außen oder nach innen zu verstellen. Diese Verstellbarkeit eines Außenspiegels ist deshalb unzufriedenstellend, da sie nicht automatisch erfolgt.

In der JP-A-60 161 232 ist eine Verstellvorrichtung für zwei beidseitige Außenspiegel eines Zugfahrzeugs eines Kraftfahrzeug-Lastzuges offenbart, der mit einem Anhänger verbunden ist, der über einen ein Drehkranzunterteil und ein Drehkranzoberteil aufweisenden Drehkranz gegenüber dem Zugfahrzeug verschwenkbar ist, wobei die Verstellvorrichtung eine Erfassungs- und Steuereinrichtung aufweist, die eine relative Drehbewegung zwischen dem Drehkranzunterteil und dem Drehkranzoberteil erfaßt und ein entsprechendes Steuersignal an einen Verstellmotor zum Verstellen eines zugeordneten Außenspiegels abgibt. Dabei ist für jeden Außenspiegel ein zugehöriger Verstellmotor vorgesehen. Als Verstellsignal wird ein der relativen Drehbewegung zwischen dem Zugfahrzeug und dem Anhängerfahrzeug entsprechendes elektrisches Signal verwendet.

Der vorliegenden Erfindung liegt die Aufgabe zugrunde, eine Verstellvorrichtung der eingangs genannten Art so weiter zu entwickeln, daß sie sowohl bei Vorwärtsfahrt als auch bei Rückwärtsfahrt des Lastzuges stets gewährleistet, daß in einem der Außenspiegel der Heckbereich des Anhängers sichtbar bleibt, ungeachtet der Abmessungen des jeweiligen Lastzuges, wodurch die Verkehrssicherheit des Lastzuges insbesondere beim Rangieren und bei engen Kurvenfahrten in der Stadt beträchtlich erhöht ist.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Die erfindungsgemäße Verstellvorrichtung weist berührungslos arbeitende Sensoren auf, die beim Überstreichen der Winkelteilung der zugeordneten Abtasteinrichtung jeweils einen Impuls zur Verstellung eines Außenspiegels hervorrufen, der dabei stufenweise um jeweils einen Winkel verstellt wird, wobei dieser Verstellwinkel je nach den Abmessungen des jeweiligen Lastzuges einstellbar ist.

Dies bedeutet, daß im zugehörigen Außenspiegel stets der Heckbereich des Anhängers -ungeachtet dessen Länge- sichtbar bleibt, und zwar sowohl bei Vorwärtsfahrt als auch bei Rückwärtsfahrt, wodurch die Verkehrssicherheit des Lastzuges erheblich erhöht ist. Der Verstellmotor kann dabei den zugeordneten Außenspiegel schnell und exakt auf die neue Position einstellen.

Mit Vorteil wird vorgeschlagen, daß jeder Außenspiegel eine eigene Erfassungs- und Steuereinrichtung aufweist, die jeweils einen bestimmten Bereich der relativen Drehbewegung der beiden Drehkranzteile und damit der relativen Knickbewegung zwischen Zugfahrzeug und Anhänger erfaßt. Zweckmäßigerweise ist für jeden Außenspiegel auch ein eigener Verstellmotor vorgesehen, der die Signale der zugehörigen Steuereinrichtung empfängt.

Hierzu schlägt die Erfindung weiter vor, daß die Erfassungs-und Steuereinrichtung einen Sensor aufweist, vorzugsweise einen berührungsfreien Sensor, der jeweils nach einem vorbestimmten Winkel der relativen Drehbewegung des Drehkranzunterteils gegenüber dem Drehkranzoberteil einen entsprechenden Impuls zur Verstellung des zugehörigen Außenspiegels abgibt. Dies bedeutet, daß der jeweils betroffene Außenspiegel nicht fortlaufend, sondern stufenweise verstellt wird, was durchaus ausreicht, um den rückwärtigen Endbereich des Anhängers im Spiegel überwachen zu können.

Der Sensor, der an einem der beiden Drehkranzteile befestigt sein sollte, wirkt zweckmäßigerweise mit einer Abtasteinrichtung zusammen, die an dem anderen Drehkranzteil angebracht ist und von dem Sensor bei entsprechender relativer Drehbewegung der Drehkranzteile überstrichen wird. Zur stufenweise Verstellung der Außenspiegel sollte die Abtasteinrichtung eine Winkelteilung haben, die so gestaltet ist, daß beim Überstreichen jeder Winkelteilung ein Impuls zur Verstellung des zugehörigen Außenspiegels hervorgerufen wird. Die Winkelteilung kann dabei feststehend oder den Abmessungen des jeweiligen Lastzuges entsprechend einstellbar sein, damit die Außenspiegel stets korrekt auf den Endbereich des Lastzuges ausgerichtet werden können.

Da jeweils nur ein Außenspiegel automatisch vestellt wird, während der andere Außenspiegel nicht zur Beobachtung des Lastzugendbereichs herangezogen wird, sollten zwei Sensoren und zwei zugehörige Abtasteinrichtungen angeordnet sein, wobei bei einer bestimmten relativen Drehbewegung der Drehkranzteile stets nur ein Sensor der zugehörigen Abtasteinrichtung gegenüberliegt und Impulse abgeben kann, während der andere Sensor unwirksam bleibt.

Wie bereits gesagt, sollte der Außenspiegel jeweils stufenweise verstellbar sein, wobei der Winkel etwa 7,5° betragen kann. Die Ausgestaltung der Verstellvorrichtung kann so getroffen sein, daß dieser Winkel je nach Abmessungen des jeweiligen Lastzuges einstellbar ist.

Zur Erfassung der relativen Drehbewegung zwischen dem Drehkranzunterteil und dem Drehkranzoberteil und zur Abgabe der zugehörigen Steuersignale sind verschiedenartige Einrichtungen geeignet, die beispielsweise ein Potentiometer aufweisen oder opto-elektrisch arbeiten können.

Die erfindungsgemäße Verstellvorrichtung ist bei allen Fahrzeugzügen anwendbar, bei denen Zugfahrzeug und gezogener Fahrzeugteil gegeneinander verschwenkbar sind. Dies trifft nicht nur für einen Lastzug aus einem Zugfahrzeug und einem mit einer Zugdeichsel versehenen Anhänger zu, sondern beispielsweise auch für einen Sattelschlepper mit auf einer Sattelplatte des Zugfahrzeugs aufliegendem Auflieger.

Anwendungsbeispiele der Erfindung werden nachfolgend mit Bezug auf die Zeichnung näher beschrieben. Dabei zeigen auf schematische Weise:
- Fig. 1: einen Vertikalschnitt durch den Drehkranz eines Anhängers mit einer erfindungsgemäßen Erfassungs- und Steuereinrichtung;
- Fig. 2: eine Aufsicht auf den Drehkranz gemäß Fig. 1;
- Fig. 3: eine Aufsicht auf das Drehkranzunterteil gemäß Fig. 1 mit schematisch angedeutetem zugehörigen Anhängerteil;
- Fig. 4: eine schematische Seitenansicht eines Sattelschleppers mit einem schematisch angedeuteten Impulsgeber;
- Fig. 5: eine Aufsicht auf die am Zugfahrzeug befestigte Sattelplatte und
- Fig. 6: eine schematische Seitenansicht der am Auflieger angebrachten Gegenplatte mit zugehörigem Königszapfen.

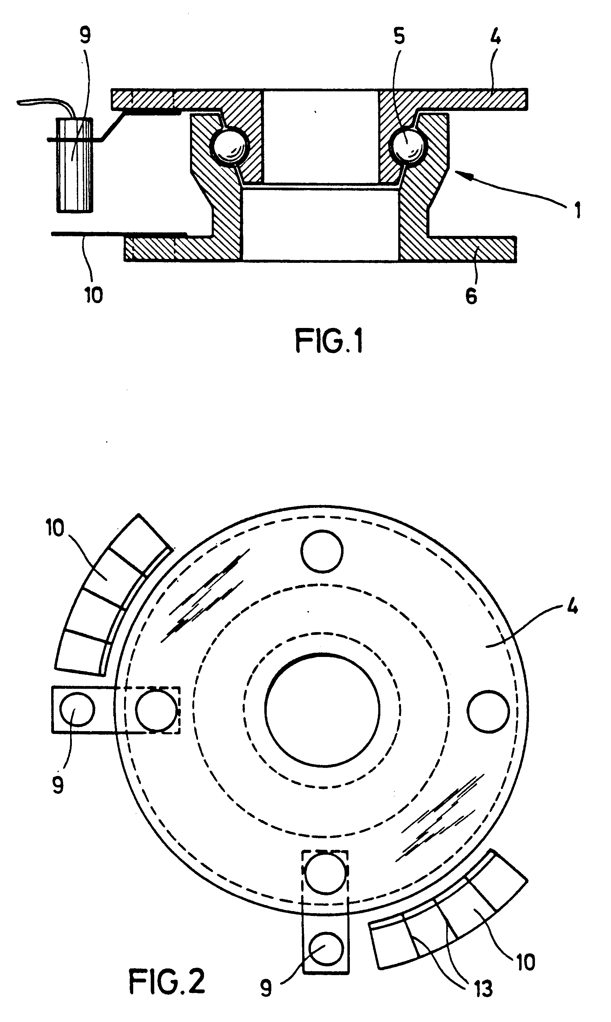

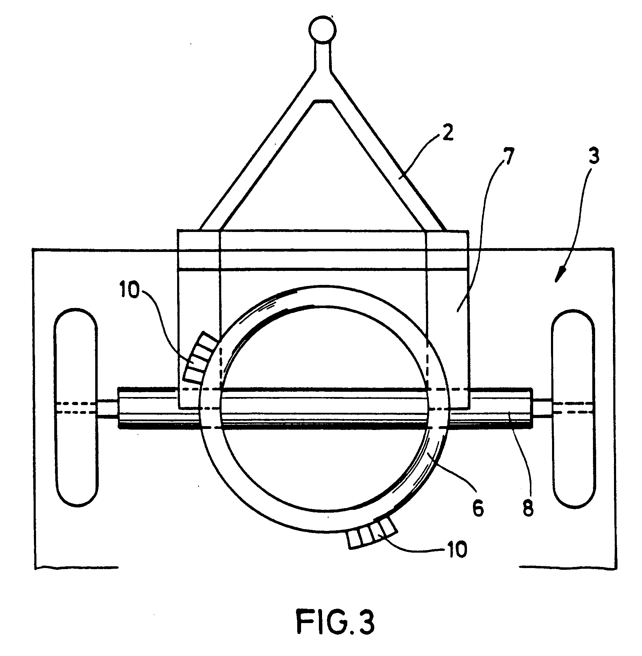

Es wird zunächst auf die Figuren 1 bis 3 Bezug genommen, in denen ein Drehkranz 1 eines mit einer Zugdeichsel 2 versehenen Anhängers 3 schematisch dargestellt ist. Der Drehkranz 1 enthält ein Drehkranzoberteil 4, das über Lagerkugeln 5 mit einem Drehkranzunterteil 6 verbunden ist. Das Drehkranzunterteil 6 ist mit der Zugdeichsel 2, dem Achsschemel 7 und dem Achskörper 8 fest verbunden, während auf dem Drehkranzoberteil 4 der nicht dargestellte Rahmen des Anhängers aufliegt. Wenn der zugehörige Lastzug eine Kurve durchfährt, wird demnach das mit der Deichsel 2 fest verbundene Drehkranzunterteil 6 gegenüber dem mit dem Anhängerrahmen fest verbundenen Drehkranzoberteil 4 verdreht.

Um die Größe dieser relativen Drehbewegung zwischen dem Drehkranzunterteil 6 und dem Drehkranzoberteil 4 zu erfassen, sind mit dem Drehkranzoberteil 4 zwei Sensoren und Impulsgeber 9 fest verbunden, denen jeweils eine Abtasteinrichtung 10 zugeordnet ist, die drehfest mit dem Drehkranzunterteil verbunden sind. Die Anordnung ist so getroffen, daß bei allen möglichen Lenkradstellungen und relativen Drehbewegungen zwischen dem Drehkranzoberteil 4 und dem Drehkranzunterteil 6 jeweils nur ein Impulsgeber 9 die zugehörige Abtasteinrichtung 10 überstreichen kann, um Impulse an den zugehörigen Verstellmotor zur Verstellung des betreffenden Außenspiegels abzugeben.

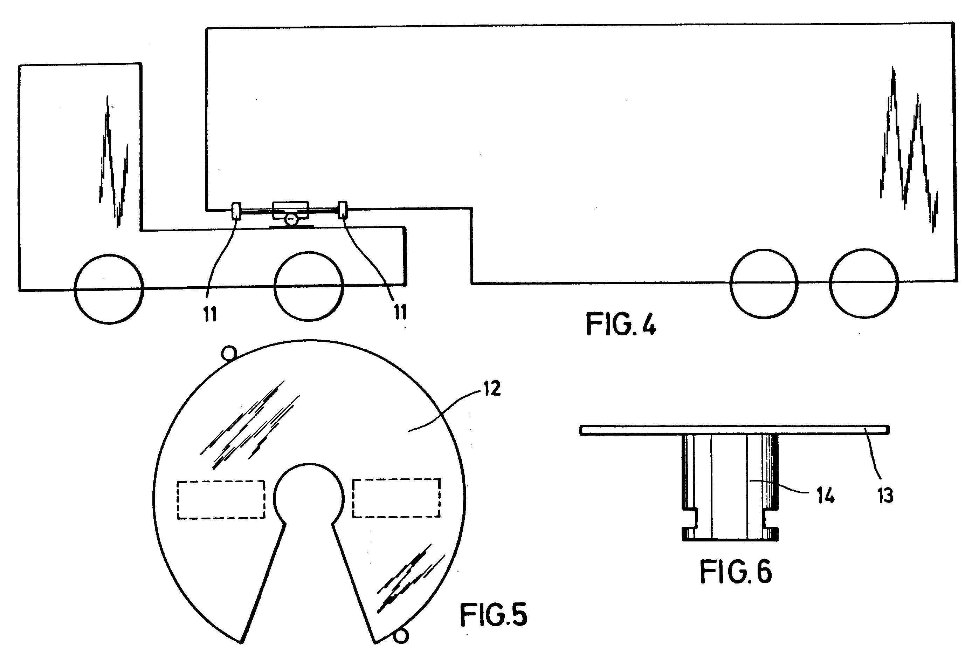

Bei dem in Figur 4 rein schematisch dargestellten Sattelschlepper sind zwei entsprechende Sensoren und Impulsgeber 11 an einer Sattelplatte 12 des Zugfahrzeugs befestigt, während mit einer am Auflieger angebrachten Gegenplatte 13, die mit einem Königszapfen 14 versehen ist, entsprechende Abtasteinrichtungen verbunden sind, die an geeigneten Stellen befestigt sind.

Die von den Sensoren und Impulsgeber 9 bzw. 11 an die zugehörigen Verstellmotoren abgegebenen Impulse rufen eine stufenweise Verstellung des jeweils zugehörigen Außenspiegels hervor die dem Überstreichen einer bestimmten Anzahl von Winkelteilungen 13 der Abtasteinrichtungen 10 entspricht.

## Patentansprüche

1. Verstellvorrichtung für zwei beidseitige Außenspiegel eines Zugfahrzeugs eines Kraftfahrzeug-Lastzuges, bei dem ein Anhänger (3) oder Auflieger mit dem Zugfahrzeug verbunden ist, der über einen ein Drehkranzunterteil (6) und ein Drehkranzoberteil (4) aufweisenden Drehkranz (1) gegenüber dem Zugfahrzeug verschwenkbar ist, mit jeweils einem Verstellmotor für jeden Außenspiegel und einer Erfassungs- und Steuereinrichtung, die eine relative Drehbewegung zwischen dem Drehkranzunterteil und dem Drehkranzoberteil erfaßt und ein entsprechendes Steuersignal an einen Verstellmotor zum Verstellen des zugeordneten Außenspiegels abgibt,
**dadurch gekennzeichnet,**
daß die Erfassungs- und Steuereinrichtung berührungslos arbeitende Sensoren (9, 11) aufweist, die beim Überstreichen der Winkelteilung der zugehörigen Abtasteinrichtung (10) jeweils einen Impuls zum Verstellen eines Außenspiegels hervorrufen, der dabei stufenweise um jeweils einen Winkel verstellt wird, und daß dieser Verstellwinkel je nach den Abmessungen des jeweiligen Lastzuges einstellbar ist.

2. Verstellvorrichtung nach Anspruch 1,
dadurch gekennzeichnet, daß für jeden Außenspiegel eine zugehörige Erfassungs- und Steuereinrichtung (9, 10; 11) vorgesehen ist, die jeweils einen vorbestimmten Bereich der relativen Drehbewegung der beiden Drehkranzteile (4, 6; 12, 13) erfaßt.

3. Verstellvorrichtung nach Anspruch 1 oder 2,
dadurch gekennzeichnet, daß zwei Sensoren (9, 11) und zwei zugehörige Abtasteinrichtungen (10) angeordnet sind, derart, daß bei einer relativen Drehbewegung des Drehkranzunterteils (6, 12) gegenüber dem Drehkranzoberteil (4, 13) nur jeweils ein Sensor seiner zugehörigen Abtasteinrichtung gegenüberliegen kann.

4. Verstellvorrichtung nach einem der Ansprüche 1 bis 3,
dadurch gekennzeichnet, daß ausgehend von einer geradlinigen Ausrichtung des Lastzuges in dem im Uhrzeigersinn liegenden relativen Drehbereich des Drehkranzunterteils (6, 12) gegenüber dem Drehkranzoberteil (4, 13) (in der Aufsicht auf den Drehkranz), der dem rechten Außenspiegel zugeordnete Sensor (9, 11) seiner Abtasteinrichtung (10) gegenüberliegend angeordnet ist, während in dem im Gegenuhrzeigersinn liegenden relativen Drehbereich der linke Außenspiegel über den anderen Sensor verstellbar ist.

5. Verstellvorrichtung nach einem der Ansprüche 1 bis 4,
dadurch gekennzeichnet, daß die Winkel der Drehbewegung des Drehkranzunterteils (6, 12) gegenüber dem Drehkranzoberteil (4, 13) und die zugehörigen Verstellwinkel der Außenspiegel so aufeinander abgestimmt werden, daß das rückwärtige Ende des Anhängers bzw. Aufliegers stets in dem jeweils betätigten Außenspiegel sichtbar ist.

## Claims

1. An adjusting device for the two external rearview mirrors of a tractor vehicle in a tractor-trailer combination wherein a trailer (3) or semitrailer is connected to said tractor vehicle, said trailer or semitrailer being pivotable relative to said tractor vehicle via a turntable (1) comprising a turntable bottom (6) and a turntable top (4), comprising a respective adjusting motor for each external rearview mirror and a detection and control means which detects a relative rotational movement between said turntable bottom and said turntable top and supplies a corresponding control signal to an adjusting motor for adjusting the associated external rearview mirror,
**characterized in**
that said detection and control means comprises sensors (9, 11) that work without any contact and create a respective pulse for adjusting an external rearview mirror when sweeping over the angular division of said associated scanning means (10), said rearview mirror being thereby adjusted stepwise by a respective angle, and that the adjustment angle can be adjusted in response to the respective dimensions of the respective tractor-trailer combination.

2. An adjusting device according to claim 1, characterized in that each of said external rearview mirrors is provided with an associated detection and control means (9, 10; 11) which respectively detects a predetermined range of the relative rotational movement of said two turntable parts (4, 6; 12, 13).

3. An adjusting device according to claim 1 or 2, characterized in that two sensors (9, 11) and two associated scanning means (10) are arranged such that upon a relative rotational movement of said turntable bottom (6, 12) relative to said turntable top (4, 13), only one respective sensor can be opposite to its associated scanning means.

4. An adjusting device according to any one of claims 1 to 3, characterized in that on the basis of a straight orientation of said tractor-trailer combination in the clockwise positioned, relative rotational range of said turntable bottom (6, 12) relative to said turntable top (4, 13) (top view on the turntable), said sensor (9, 11) assigned to the right external rearview mirror is arranged opposite to its scanning means (10) while the left external rearview mirror is adjustable via the other sensor in the anticlockwise positioned relative rotational range.

5. An adjusting device according to one of claims 1 to 4, characterized in that the angles of the rotational movement of said turntable bottom (6, 12)) relative to said turntable top (4, 13) and the associated adjustment angle of said external rearview mirror are matched such that the rear end of said trailer or semitrailer is always visible in the respectively operated external rearview mirror.

## Revendications

1. Dispositif de réglage pour deux rétroviseurs extérieurs du véhicule tracteur d'un train routier auquel est attelée une remorque (3) ou un plateau qui est orientable par rapport au tracteur grâce à l'intervention des parties inférieure (6) et supérieure (4) d'une couronne de rotation (1), équipé selon le cas d'un servomoteur pour chacun des rétroviseurs extérieurs ainsi que d'un système de détection et de commande qui enregistre un mouvement relatif de rotation entre les parties inférieure et supérieur de la couronne mentionnée et transmet un signal de commande au servomoteur pour le décalage du rétroviseur sollicité ;
caractérisé par le fait que
le dispositif de détection et de commande est équipé de palpeurs sans contact (9, 11) qui, lors de l'exploration de la graduation angulaire du système de balayage correspondant (10), génèrent une impulsion qui commande le réglage de l'un des rétroviseurs extérieurs, lequel se décale pas à pas d'un certain angle et en ce que cet angle de décalage est réglable en fonction des dimensions du train routier.

2. Dispositif de réglage suivant la revendication l; caractérisé par le fait que, pour chacun des rétroviseurs extérieurs, une installation de détection et de commande (9, 10; 11) est prévue qui couvre le mouvement relatif des deux parties de la couronne de rotation (4, 6; 12, 13) sur une zone donnée.

3. Dispositif de réglage suivant l'une des revendications 1 ou 2; caractérisé par le fait que deux palpeurs (9, 11) et deux installations de balayage correspondantes (10) sont disposés de telle sorte que, lors d'un mouvement relatif de la partie inférieure (6, 12) par rapport à la partie supérieure (4, 13) de la couronne de rotation, seul l'un de ces palpeurs se trouve placé en face de son installation respective de balayage.

4. Dispositif de réglage suivant les revendications 1 à 3 ; caractérisé par le fait qu'à partir d'une configuration rectiligne du train routier, le palpeur (9, 11) affecté au rétroviseur extérieur droit se trouve placé en face du système de balayage (10) correspondant lors du mouvement relatif dans le sens des aiguilles d'une montre de la partie inférieure (6, 12) par rapport à la partie supérieure (4, 13), (en vue de dessus de la couronne de rotation), cependant que le rétroviseur gauche, qui se trouve placé dans le champ de rotation contraire au sens des aiguilles d'une montre peut être réglé, lui, par le second palpeur.

5. Dispositif de réglage suivant les revendications 1 à 4; caractérisé par le fait que les angles du mouvement de rotation de la partie inférieure (6, 12) par rapport à la partie supérieure (4, 13) de la couronne et les angles de décalage correspondants des rétroviseurs extérieurs sont réglés entre eux, de sorte que l'arrière de la remorque ou du plateau reste constamment visible dans le rétroviseur commandé.
